# EUROPEAN PATENT APPLICATION

(11) **EP 4 614 184 A1**
(43) Date of publication of application: **10.09.2025**
(21) Application number: 24315082.8
(22) Date of filing: 05.03.2024
(51) Int. Cl.: G01S 7/41, G01S 13/56

(54) **DISCRIMINATION BETWEEN ADULT AND CHILD BASED ON RADAR SIGNAL**

(71) Applicant: IMRA Europe S.A.S., 06904 Sophia Antipolis (FR)
(72) Inventor: Fujita, Takeshi, Fukuoka (JP); Nakano, Yuta, 06560 Valbonne (FR); Bendahan, Rémy, 06160 Juan Les Pins (FR)
(74) Representative: Novagraaf International SA

(57) **Abstract**

A computer-implemented method for detecting at least one object or at least one person in a monitored area of a monitoring device, the method comprising the steps of :
- receiving (S1) signal data from the monitoring device,
- composing (S2) time series data based on the signal data received,
- extracting (S3) times series features from the time series data,
- generating (S4) spikes from the time series features,
- detecting (S5) at least one object or at least one person based on the generated spikes.

## Description

The present invention relates to the field of method for detecting objects in monitored areas, in particular for detecting child or person presence in a vehicle.

Methods for detecting objects in monitored areas are known in the art, in particular methods using neural networks.

PTL1 is directed to features which are extracted from phase history data generated by raw radar data (complex number) from a synthetic aperture, then spikes are generated and fed to Spiking Neural Networks (SNN). As this technology is for making a geographical map which covers vast area, huge processing is necessary to convert from radar signal to the map.

As the name of sensor "synthetic aperture" explained, it makes a big map by combining many radar signals of different timings in order to realize virtual large aperture. That is to say, this sensor makes the big map at expense of time series information (in synthetic aperture radar, its scanning area is changed while aperture, it means, it is impossible to take time series information because the sensor does not scan same area). Finally, the map includes angle and distance from objects, but does not includes the speed of object. In other words, the map is static.

PTL2 is partly similar to PTL1 but is also discloses the use of recurrent neural network after Spiking Neural Networks (SNN). The reason of the use of recurrent neural network architecture is that it is desired to separate data for some reasons such as separation by spatial information. The separated data is fed to recurrent neural networks one by one.

According to the block chart and embodiment of PTL2, at first, spikes are fed to Spiking Neural Networks, then, output is fed to recurrent neural networks. This architecture is actually complex and leads to difficulties, in particular during the training and the like. Further, geographical map making requires many computational resources. Therefore, this architecture is not useful, it will depend on data and use case. Also, PTL2 has similar drawback in comparison with PTL1.

PTL3 describes the technology about the combination between radar sensor data and Spiking Neural Networks (SNN). The point in this kind of technology is how to generate (encode) spikes from input data, in this case, to generate spikes from radar data. In PTL3, spikes are generated from "binarized matrix", which is binary image made from radar data by preprocessing (STFT : Short Time Fourier Transform). By aligning the binarized matrix in time sequence, time series spike signal is prepared.

In PTL3, the spike is generated from a spectrogram make by STFT, which is common in radar processing. Therefore, although this technology is able to reduce computation cost thanks to SNN, the performance in terms of recognition is same level as conventional method.

NPTL4 is directed to realize hand gesture recognition on radar data by using Spiking Neural Networks (SNN). To be more specific, the reason to use SNN is for energy efficiency. In order to use SNN, PTL4 implements a spike encoder from binarized spectrogram which is made by Fast Fourier Transform on radar data composed of multiple chirps. Then, the generated spikes are fed to SNN, especially liquid state machine.

NPTL4 have similar drawbacks in comparison with PTL3. As this technology uses conventional preprocessing (FFT : Fast Fourier Transform) to make a spectrogram, the performance in terms of recognition is same level as conventional method.

NPTL5 discloses the willingness to combine a map data (distance - angle) from radar data and SNN to process sparse data. First of all, the map from radar data is sparse because the map has only signals that shows the existence of object, it means, if there is an area that does not have any object, there is no signal. Therefore, the SNN which can deal with sparse data is suited for the map data. Then, another technology is to install attention mechanism to improve the performance of trajectory estimation.

In NPTL5, there is a limitation about input data of the SNN. Similarly to PTL1, NPTL5 also uses a map made by spectrograms, to be more specific, by FFT. As far as the map is used as input, dramatically performance improvement is not expected.

NPTL6's motivation is to reduce time consuming task for calibration in conventional radar signal processing, such as parameter tuning by replacing them with Deep Neural Networks (DNN). To be more specific, raw radar data is feed, whose form is complex number directory, to the DNN, without any preprocessing and filtering.

However, in terms of dealing with time series data such as temporal spike data, it is difficult for this method to take into account time series information because of using conventional DNN.
PTL1 : US10976429B1
PTL2 : US11150327B1
PTL3 : US20210365778A1
NPTL4 : Radar-Based Hand Gesture Recognition Using Spiking Neural Networks. Electronics 2021 https://www.mdpi.com/2079-9292/10/12/1405
NPTL5 : General spiking neural network framework for the learning trajectory from a noisy mmWave radar. 2022 Neuromorph. Comput. https://iopscience.iop.org/article/10.1088/2634-4386/ac889b/pdf
NPTL6 : Deep Radar Detector. 2019 IEEE radar conference https://ieeexplore.ieee.org/document/8835792

Thereby, an aim of the present invention is to overcome the disadvantages of the prior arts mentioned, and in particular to improve the recognition or detection accuracy, while simplifying and limiting the effort, in particular computational effort, to achieve the same. In other words, there is a lot of useful information in the radar signal data (e.g. raw data or (simple) filtered data) and in the time series, and there is a desire to make the most of it. The (Fast) Fourier transform (FFT) is a convenient method to extract meaningful information but at the same time, it deletes many information that might be useful for detection or recognition. This is why the present invention deals with radar signal data without any conversion / transformation at the early beginning and with time series. Signal data is preferably data from sensor without conversion. Actually, FFT (Fast Fourier Transform) is kind of conversion (= transformation), it means, format of data is changed. That is, it is preferable to use data without filtering or with also simple filtering which does not change the format of data (e.g. average filter, thresholding). Therefore, (initial) signal data is considered to be data received from sensor and/or data without conversion/transformation of its format.

In addition to the advantage of using signal data without conversion or transformation (e.g. raw data), dealing with data as time series information can also contribute to detection/recognition performance. As the time series data can capture a movement of object, it is useful for baby or child presence detection because they move even in a vehicle.

That is, a first aspect of the present invention relates a computer-implemented method for detecting at least one object or at least one person in a monitored area of a monitoring device,
the method comprising the steps of:
- receiving signal data from the monitoring device,
- composing time series data based on the signal data received,
- extracting times series features from the time series data,
- generating spikes from the time series features,
- detecting at least one object or at least one person based on the generated spikes.

This allows to improve the recognition or detection accuracy, while simplifying and limiting the effort, in particular computational effort, to achieve the same. That is, this provides an improved method with more accuracy and improved speed, with a simplified construction. The present invention is very useful in particular for in-cabin situations, wherein there is no big movement, and many reflections of radar signal due to the closed space. The signal data processing, without conversion nor transformation, with the composition of time series data / features allows to capture movements, in particular slight movements.

It is possible to not only detecting objects but also classifying image (scene, etc) or pixels. That is, it is possible to use the present method not only for object detection, but also classification, segmentation and other purposes.

The signal data is preferably the signal received from devices (e.g. sensor, receiver of sensor) without any conversion or transformation , that is to say, it could be raw data. If possible, signal data includes data with filtering under same data format. In other words, it is preferred to use signal data different from converted data, such as "complex data and map (or spectrogram) created by FFT. In contrast, "complex data without filtering and with filtering but still complex data" is same format. Complex data is with real part and imaginary part, in the mathematical meaning.

In PTL1, as mentioned above, it is impossible to use (short interval) time series information because it uses long interval data to capture wide area by accumulating many short interval data as one static data. Therefore, the technology of PTL1 can make a large map including angle and distance of object (from sensor), however, it does not have time series information such as speed of object. PTL1 does not disclose the use of time series information.

In contrast, the present invention is to connect many short interval chirp data from radar sensor as a long time series information. Unlike PTL1, the present invention extracts features of the time series information and generates spikes to be fed to Spiking Neural Networks (SNN). In another word, against a static map that is the output of PTL1, the output of the present invention is dynamic information such as action, behaviour and object whose movement is different from others.

In synthetic aperture radar, which is used in PTL1 and PTL2, its scanning area is changed while aperture, it means, it is impossible to take time series information. This is because the sensor does not scan the same area.

With respect to PTL2, this document divides spike data that is made by the technology of PTL 1 and feed the divided data to recurrent neural network. If there is a special reason to deal with data as multiple portions, this algorithm might work. However, it is rare to be suited for this use case in general. In addition to that, it is difficult to make this kind of architecture work because it is needed to combine SNN and recurrent neural network.

The present invention (algorithm) does not need to prepare additional neural network such as recurrent neural network of PTL2. As the data generated by the present invention is (simple) time series data, a discriminator/classifier which can deal with the time series data such as SNN works without such an additional component. Also, the parts of spike encoding in PTL2 is different from the present invention, the reason as similar to the one mentioned for PTL1.

With respect to PTL3 and NPTL4, one point of these documents is spike encoder from radar spectrogram made by FFT. In order to generate temporal spikes, PTL3 and NPTL4 apply binarization filter on spectrogram, then if certain frequency band has greater value than threshold, spike is generated.

With PTL3 and NPTL4, in terms of recognition accuracy, it is difficult to improve from conventional methods which use spectrogram as it is because PTL3 and NPTL4 use same input data (the spectrogram) as conventional ones in essential, rather than that, the binarization might decrease the performance.

The present invention also generates spikes from radar data, however, the source of spike is different from the prior art. In fact, the present invention uses signal data or raw data (complex number) of radar data for spike generation. Raw data refers to raw data and/or at least complex data format even if filter is applied. Although the FFT to make a spectrogram from raw data is useful to extract features of the data, many details of the data are lost. Especially in radar data, noises and meaningful data are mixed. Actually, our past study proved that using radar raw data in Deep Neural Network improves object detection performance compared with FFT treated data. That's why we encode from radar raw data to spike for keeping meaningful information. This point is different from the prior art. In addition to that, this "spike encoding from radar signal data" according to the present invention is a new technique, not disclosed elsewhere.

With respect to NPTL5, the document has same drawbacks in comparison to PLT1, which is to use filtered radar data as input, such as a distance-angle map or spectrogram. Even if there is an advantage in terms of energy efficiency due to SNN, performance of trajectory estimation which is a target in this prior art cannot be improved drastically because input data is same as conventional study.

It is also assumed to use SNN for energy efficiency, however, the aim of the present invention is to achieve not only better energy efficiency but also better perception performance. In order to improve the perception performance, the present invention uses (radar) signal data whose format is preferably complex number, then, spikes are generated from the signal data. This point is different from prior arts.

With respect to NPTL6, this prior art feeds raw radar signal whose form is complex number directory to Deep Neural Networks. In the case that we want to deal with time series information such as temporal spike, this method is not enough because conventional DNN cannot take into account time series information well.

The invention can also be defined according to the following features, taken individually or in combination.

Advantageously, the method further comprises the step of:
- inputting the generated spikes in a neural network and outputting from the neural network a detection of the at least one object or at least one person, or
- treating the generated spikes with a support vector machine (SVM), a principal component analysis (PCA), K-means, random forests, a decision tree or a (other) classifier.

This allows to detect the at least one object or at least one person. In general, the neural network is much better in terms of object detection/recognition performance, but mentioned alternatives (SVM, PCA, K-means, random forests, decision tree or classifier) can compute with low energy consumption because of their simple algorithm.

Advantageously, the neural network is a spiking neural network (SNN).

This allows to reduce the computational effort and response time while improving the quality of detection.

Advantageously, the (raw) signal data has a real part and an imaginary part, and the method further comprises the step of :
- composing time series data based on the real part of the (raw) signal data received and time series data based on the imaginary part of the (raw) signal data received.

This allows to use the (raw) signal data and exploit all the available information.

Advantageously, the method further comprises the steps of:
- recognizing a pattern of generated spikes,
- allocating the pattern of generated spikes to a result of detection.

This allows to allocate the pattern to improve the detection results.

Advantageously, the method further comprises the step of:
- retrieving, in a data base, supervised or unsupervised patterns linked to objects and/or persons to be detected.

This allows to improve the quality of detection.

Advantageously, the method further comprises the step of:
- comparing the pattern of generated spikes to the supervised or unsupervised patterns and judge a match or a mismatch of the pattern of generated spikes with the supervised patterns.

This allows to improve the quality of detection. The patterns can be generated by detection methods such as neural network or above mentioned SVM, PCA, K-means, random forests, decision tree or classifier. For the neural network including deep neural network, the patterns are preferably created based on supervised methods, but others such as PCA and K-means, they make it by "unsupervised" approach. In SNN, it uses both supervised or unsupervised (depending on selected algorithm inside SNN).

Advantageously, the result of detection is selected in the group consisting of:
a passenger, a driver, an adult, a child, a baby, no person on a seat, a cat, a dog, an animal, a bottle and an object.

Advantageously, the monitoring device has a first predetermined number of receivers and a second predetermined number of transmitters, and wherein the signal data corresponding to a set of receivers and transmitters is mixed for composing the time series data.

Advantageously, the monitoring device has a first predetermined number of receivers and a second predetermined number of transmitters, and wherein the method further comprises the steps of :
- dividing the signal data into divided signal data for each receiver linked to each transmitter, so as to have a divided set of a third predetermined number of divided signal data, the third predetermined number being equal to the first predetermined number multiplied by the second predetermined number,
- composing the time series data based on the divided signal data.

Advantageously, the neural network has an input layer or input nodes.

This allows to input data in the neural network.

Advantageously, the signal is divided into several groups and the divided set is sent to the corresponding branch.

Advantageously, the neural network has an output layer or output nodes.

Advantageously, the neural network has the number of neurons or branches equal to the number of seats (or available places) in the vehicle.

Advantageously, the neural network has both branch part and fully connected part. That is, branches are used in input part, and then fully connected layer is used in output part.

Advantageously, the transmitter is a radar, preferably sending millimeter waves.

Advantageously, the transmitter is a wireless device emitting waves. It could be a sonar, a lidar, a light emitter or a radio emitter, or any suitable device.

Advantageously, the receiver is arranged to detect the emission of the transmitter and/or the re-emission reflected by the object to be detected (or by any other object in the monitored area).

Advantageously, the monitoring device is placed in a vehicle.

Advantageously, the monitored area is inside the vehicle.

Advantageously, the object is an occupant of a vehicle such as a driver, a passenger, a child, a baby, an animal or a thing such as a child seat.

This allows to detect object in the vehicle, in particular to avoid to leave a child or baby or an animal in the car which is parked for long time in the parking for example. Further, this allows to confirm child (baby) existence even if child seat is installed or not.

Advantageously, the neural network, in particular the receiver layer and/or the transmitter layer, is trained, preferably by unsupervised learning or supervised learning. The neural network is preferably a spiking neural network SNN.

In the case of supervised training, it is possible to use a training dataset (radar data + labels (i.e correction, e.g. seat A and C have occupant)), then the neural network is trained by following the label.

This allows to improve the performance of the method, in terms of accuracy and speed for example.

The radar uses millimeter wave, but after receiving, the data is transformed into digital data, whatever the transmission is.

Millimeter wave is high frequency wave.

That is, we can send a large amount of data, so it is used in data transfer. The higher the frequency is, the higher the resolution is. In contrast, the higher the frequency is, the shorter the transferred distance is.

Advantageously, the monitoring device is arranged to monitor outdoor.

Advantageously, the monitoring device is arranged to monitor on the road (e.g. bus stop seat occupancy).

Advantageously, the monitored area is outside the vehicle.

Advantageously, the monitoring device is arranged to monitor an inside of a room.

Advantageously, each said branch is composed of one or multiple nodes (neurons) in neural network architecture.

Advantageously, each branch of the receiver layer and each branch of the transmitter layer is paired (allocated) to a corresponding divided signal data for each receiver linked to each transmitter.

Inputting in the neural network the divided set is done as follows : inputting in the paired branch of receiver layer and transmitter layer the corresponding divided signal data for each receiver linked to each transmitter.

The neural network, in particular the feature extraction, transforms input data to extract important data and to reduce redundant data for outputting required results.

Therefore, preparing each branch for input from each receiver/transmitter equals to doing feature extraction specific for each receiver/transmitter.

. Advantageously, the signal data is a signal data received from a sensor, such as a radar, a sonar or a camera .

Advantageously, the signal data is raw signal data in a complex format (with a real part and an imaginary part).

Advantageously, the signal data is data with or without filtering, but without conversion of format.

A second aspect of the present invention relates to a monitoring device arranged to implement the computer-implemented method for detecting at least one object or at least one person according to the first aspect.

This allows to provide the advantages mentioned above.

A third aspect of the present invention relates to a vehicle equipped with the monitoring device according to the previous aspect.

This allows to provide the advantages mentioned above.

A fourth aspect of the present invention relates a computer-readable medium comprising instructions which, when executed by a computer, cause the computer to carry out the method of the previous aspect.

This allows to provide the advantages mentioned above.

Other features and advantages of the present invention will appear more clearly from the following detailed description of particular non-limitative examples of the invention, illustrated by the appended drawings where:
figure 1 represents a conventional method for detecting an object,
figure 2 represents schematically a vehicle with some occupants, according to the present invention,
figure 3 represents steps of a computer-implemented method for detecting at least one object or at least one person in the vehicle according to the present invention,
figure 4 represents a schematic arrangement of a monitoring device and a functioning of the computer-implemented method for detecting at least one object according to the present invention,
figure 5 represents signal data to be processed by the method according to the invention,
figure 6 represents signal data being divided by the method according to the invention,
figure 7 represents details of the signal data,
figure 8 represents signal data and moving average real part value and imaginary part value,
figure 9 represents details of the steps of computer-implemented method according to the present invention,
figure 10 represents signal data processed by the method according to the invention,
figure 11 represents a comparison of signals with a deep neural network and a spiking neural network,
figure 12 represents details of functioning of a spiking neural network according to the invention.

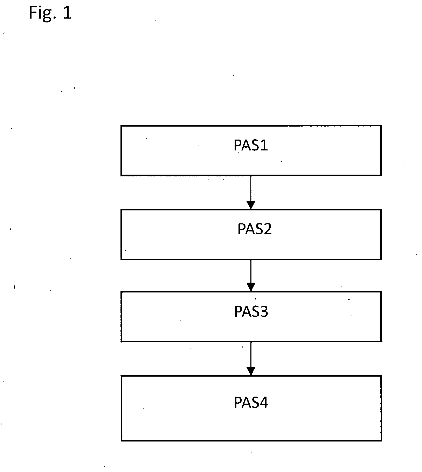

Figure 1 represents a conventional method for detecting an object.

At the conventional step PAS1, data from sensor is received. It could be e.g. raw signal data, in the form of complex number.

At the conventional step PAS2, the raw signal data is filtered by using FFT. Typical filtering is a triple filtering by FFT for angle, distance and speed extraction.

At the conventional step PAS3, the distance map is created.

At the conventional step PAS4, the DNN is used for object detection, with input being the distance map and output being the result of detection.

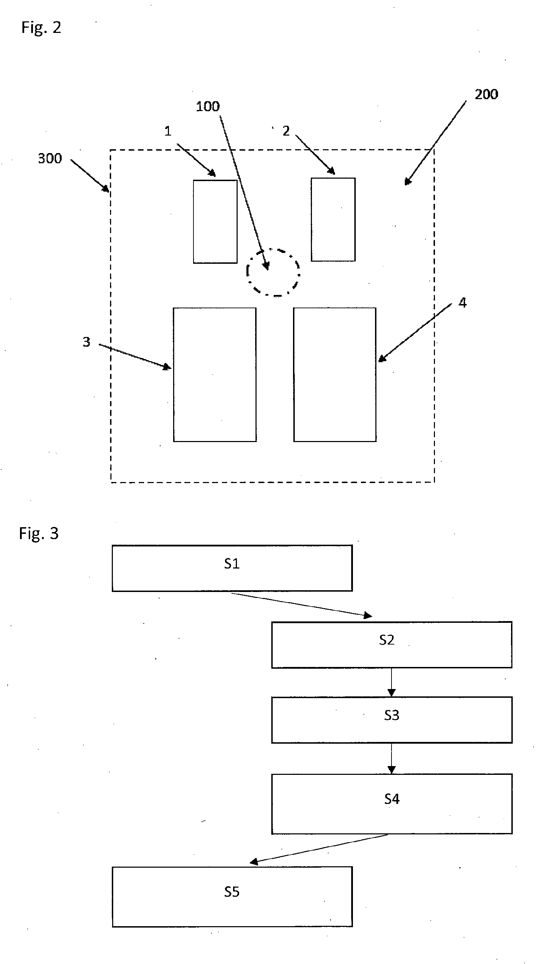

Figure 2 represents schematically a vehicle 300 with some occupants or objects 1, 2, 3, 4, according to the present invention. The vehicle 300 is equipped with a monitoring device 100 for monitoring a monitored area 200.

For the purpose of illustration only, it could be considered that reference 1 corresponds to a baby, reference 2 corresponds to a child seat, reference 3 corresponds to a first adult and reference 4 corresponds to a second adult.

The monitoring device 100 is arranged to monitor a monitored area 200, wherein a baby 1 to be detected is placed, in particular is left, for safety purpose. The monitoring device 100 may be installed e.g. on a (inner) ceiling of the vehicle 300 in order to monitor the inside of the vehicle 300.

The monitoring device 100 may be placed in the vehicle 300 and the object or person to be detected may be e.g. a person, a child, an animal (such as a dog or a cat or any kind of animal), a child seat, or any type of object, being alive or a thing.

The monitored area 200 may be an inside of the vehicle 300, and the result (or output) of the method could be to detect the presence of the object or person 1 (person, animal or thing, etc). Further, the result of the method could be to identify the object or person 1, that is to say to state that the object or person 1 is a baby 1, a person, an animal or a thing, and preferably of which kind. Still further, the result of the method could be to identify where the object or person 1 is, in the monitored area 200. For example (non-limitative), the result could be "an adult is placed on the right seat on the first row of the car", or "a child is placed on the right seat on the second row of the car", or "a child is placed on the central seat on the second row of the car and is in its child seat" or "a child seat is placed on the left seat on the second row of the car and is empty", "a dog is in the vehicle " or "a baby is in or left in the vehicle".

As an illustrative example, the monitoring device 100 may be equipped with receivers (Rx), in particular with a first determined number of receivers, for example four receivers Rx1, Rx2, Rx3, Rx4 and with transmitters Tx, in particular with a second predetermined number of transmitter, for example three transmitters Tx1, Tx2, Tx3.

The transmitters (Tx) may be spaced apart from a distance lambda (symbol *λ*). The distance lambda is e.g. 5 mm. The receivers Rx may be e.g. spaced apart from lambda divided by two.

The transmitters Tx emit one or more transmitted waves, which may be reflected by the object 1 as one or more reflected waves. The reflected waves may be received (or captured) by the receivers Rx.

The monitoring device 100 may comprise a computer, a processor, a memory, a control unit, a (radar) sensor and/or a camera.

The monitoring device 100 may be connected to a cloud, a server, a smartphone or the like.

Figure 3 represents steps of the computer-implemented method for detecting at least one object or at least one person in the vehicle 300 according to the present invention.

The computer-implemented method for detecting at least one object or at least one person 1 in the monitored area of a monitoring device 100,
the method comprising the steps of:
- receiving S1 signal data from the monitoring device 100,
- composing S2 time series data based on the signal data received,
- extracting S3 time series features from the time series data,
- generating S4 spikes from the time series features,
- detecting S5 at least one object or at least one person 1 based on the generated spikes.

It is possible to input the generated spikes in a neural network, preferably a spiking neural network, and output from the neural network a detection of the at least one object or at least one person 1.

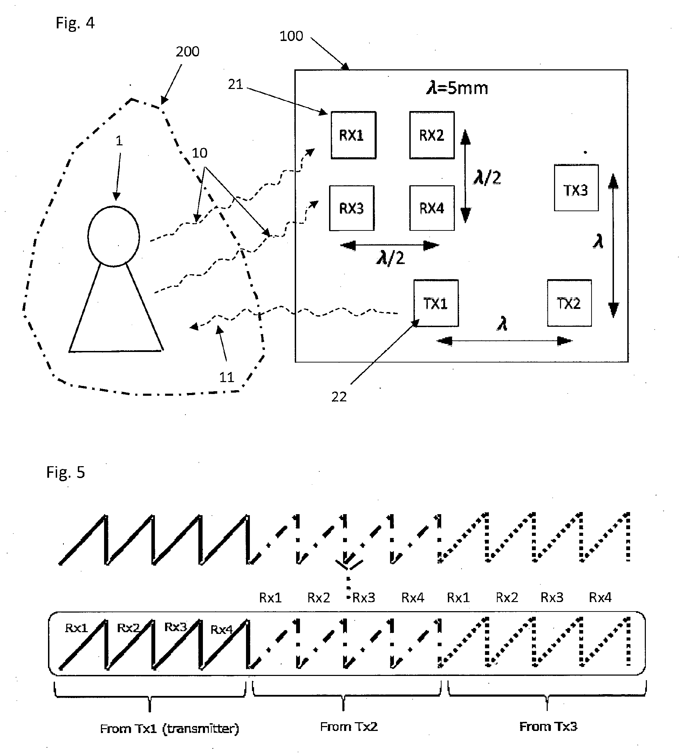

Figure 4 represents the schematic arrangement of the monitoring device 100 to be installed in the vehicle 300 and the functioning of the computer-implemented method for detecting at least one object or person according to the present invention.

The monitoring device 100 is arranged to monitor the monitored area 200, wherein at least one object or person 1 to be detected is placed (or may be placed).

The monitoring device 100 may be placed in a vehicle and the object or person 1 may be e.g. a person, a child, an animal (such as a dog or a cat or any kind of animal), a child seat, or any type of object, being alive or a thing.

The monitored area 200 may be an inside of the vehicle 300, and the result (or output) of the method could be to detect the presence of the object or person 1 (person, animal or thing, etc). Further, the result of the method could be to identify the object 1, that is to say to state that the object 1 is a person, an animal or a thing, and preferably of which kind. Still further, the result of the method could be to identify where the object 1 is, in the monitored area 200. For example (non-limitative), the result could be "an adult is placed on the right seat on the first row of the car", or "a child is placed on the right seat on the second row of the car", or "a child is placed on the central seat on the second row of the car and is in its child seat" or "a child seat is placed on the left seat on the second row of the car and is empty" or "a dog is placed on the left seat of the third row of the car" or "a baby is placed on a seat".

As an alternative, the monitored area 200 may be also an outside of the vehicle. Thereby, the result (non-limitative) could be "a cyclist is stopped at 100 meters on the left side of the road", or "a pedestrian is moving in the middle of the street, at 25 meters", or "the speed of said pedestrian is 5 km/h", or "the speed of said pedestrian is abnormally high" (compared to usual walking speed), or "a car is moving on the right side of the road", or "a car is moving on the right side of the road in the forward direction".

The monitoring device 100 may be equipped with receivers (Rx or 21), in particular with a first determined number of receivers, for example four receivers Rx1, Rx2, Rx3, Rx4 and with transmitters Tx, in particular with a second predetermined number of transmitter, for example three transmitters Tx1, Tx2, Tx3.

The transmitters 22 (or Tx) may be spaced apart from a distance lambda (symbol λ). The distance lambda is e.g. 5 mm. The receivers Rx may be e.g. spaced apart from lambda divided by two.

the transmitters Tx emit one or more transmitted waves 11, which may be reflected by the object 1 as one or more reflected waves 10. The reflected waves 10 may be received (or captured) by the receivers Rx. The type of signals and signal data of the transmitters Tx and the receivers Rx will be explained with more details here after.

Figure 5 represents signal data to be processed by the method according to the invention.

The signal data (upper portion of the figure) is schematically represented as chirps in a (common) frame.

It is possible to have an input nodes that allow to divide the frame in identified chirps with a double reference to the receiver and the transmitter it concerns.

It is possible to divide the signal data.

That is, the input nodes allow to individualize the chirps, that is to say to divide the frame into single chirps, as mentioned above. The idea is to detach each chirp, so that each chirp could be sent to corresponding branch of the receiver layer, as further explained hereafter.

It is possible to divide the frame in identified chirps with a double reference to the receiver and the transmitter it concerns. For example, it is then possible to identify that the first chirp belongs to the first receiver Rx1 and the first transmitter Tx1 (that is to say signal emitted from the first transmitter Tx1 and reflected to the first receiver Rx1 by the object 1). The same applies for other chirps, e.g. the seventh chirps starting from the left belong to the third receiver Rx3 and the second transmitter Tx2 (that is to say signal emitted from the second transmitter Tx2 and reflected to the third receiver Rx3 by the object 1). That is, the number of chirps is equal to the third predetermined number (i.e. equal to the first predetermined number multiplied by the second predetermined number). In the given example, there are twelve chirps (three transmitters Tx1 to Tx3 multiplied by four receivers Rx1 to Rx4).

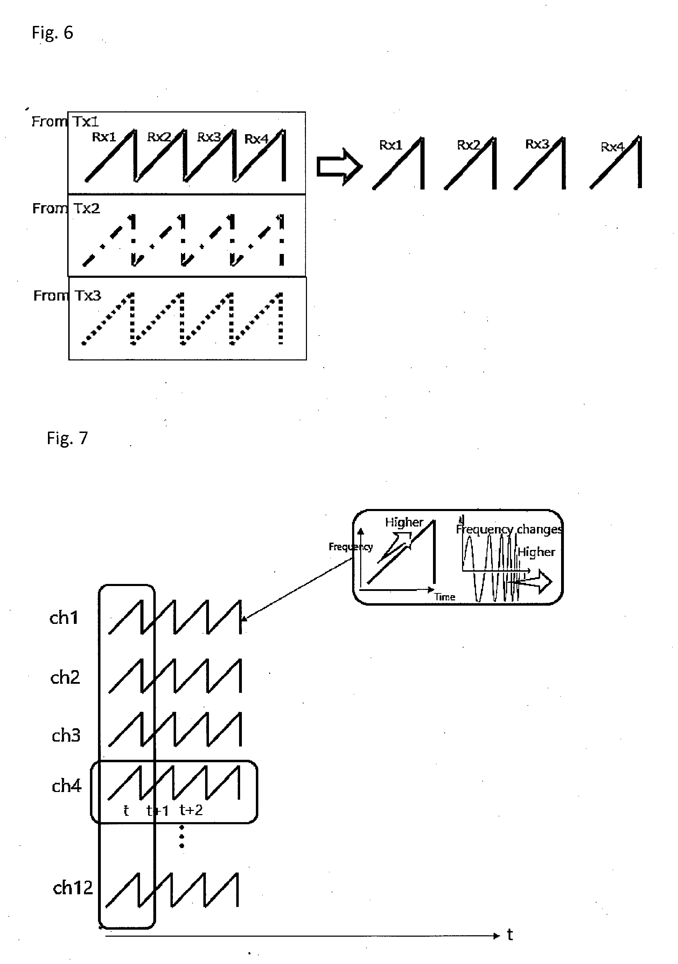

Figure 6 represents signal data being divided by the method according to the invention.

That is, it is possible to individualize the chirps, that is to say to divide the frame into single chirps, as' mentioned above. The idea is to detach each chirp, so that each chirp could be sent to the next steps of the method.

Figure 7 represents details of the signal data,
In radar sensor, in each signal transmission (in each chirp), various frequency are included.

In the triangle figure, vertical axis is frequency, it means, high position on vertical axis is high frequency. Its horizontal axis is time.

Therefore, with time passing, frequency increased in each chirp transmission.

That's why, in the waveform figure at upper right of Fig. 7, one can see frequency becomes higher with time passing (horizontal axis)

In radar sensor, this kind of transmission is done iteratively.

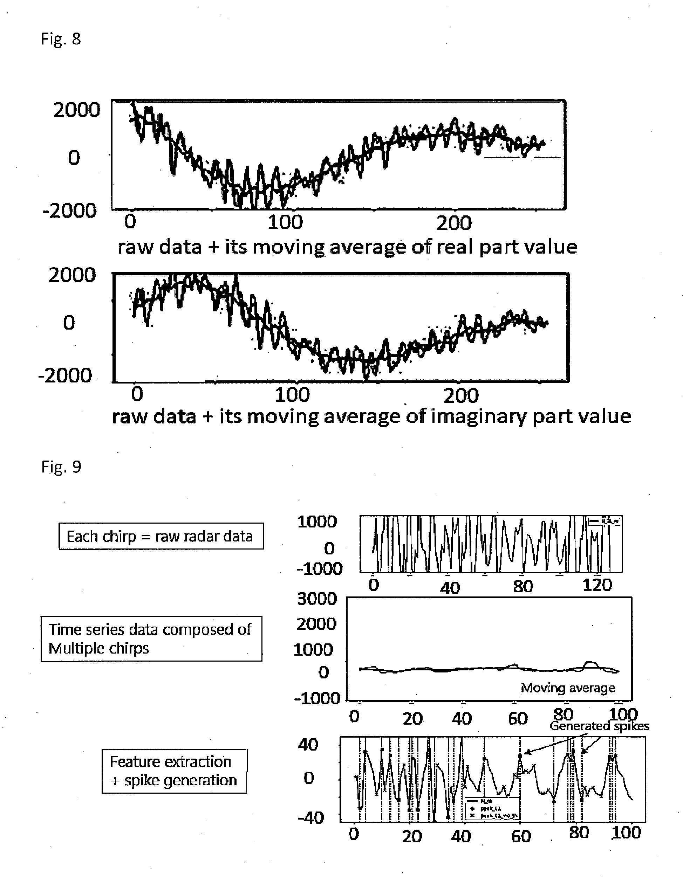

Figure 8 represents signal data and moving average real part value and imaginary part value.

An example of signal data is data received from the sensor. It could be in the form of a complex number (in the mathematical meaning) with a real part and an imaginary part. Non filtered and filtered signal are both acceptable in the present invention, but we need to keep data form (that is, map derived by FFT spectrogram cannot be acceptable). Figure 8 represents the signal data with the moving average of real part value, along time in e.g. milli-seconds, on the top portion of figure 8 and the signal data with the moving average of imaginary part value, along time in e.g. milli-seconds, on the bottom portion of figure 8.

The value on the ordinate are, for example, in arbitrary unit or without unit. An important point is the combination (ratio) of two values, real and imaginary parts.

Figure 9 represents details of the steps of computer-implemented method according to the present invention.

In the illustrative example, each chirp (of e.g. figure 5) corresponds to a radar data (or signal data).

It is then possible to use signal data of each chirp (or signal data of each receiver, or signal data of each transmitter, or signal data of each combination of receiver and transmitter) and to compose a time series data. It is possible either to combine the whole set of signal data to combine the time series data or to compose time series data from each signal data corresponding to each chirp.

The time series data being composed from multiple chirps, it is possible to extract time series features, and then to generate spikes from the time series features.

There after, it is possible to detect the at least one object or at least one person 1 based on the generated spikes, in particular movement and slight movement.

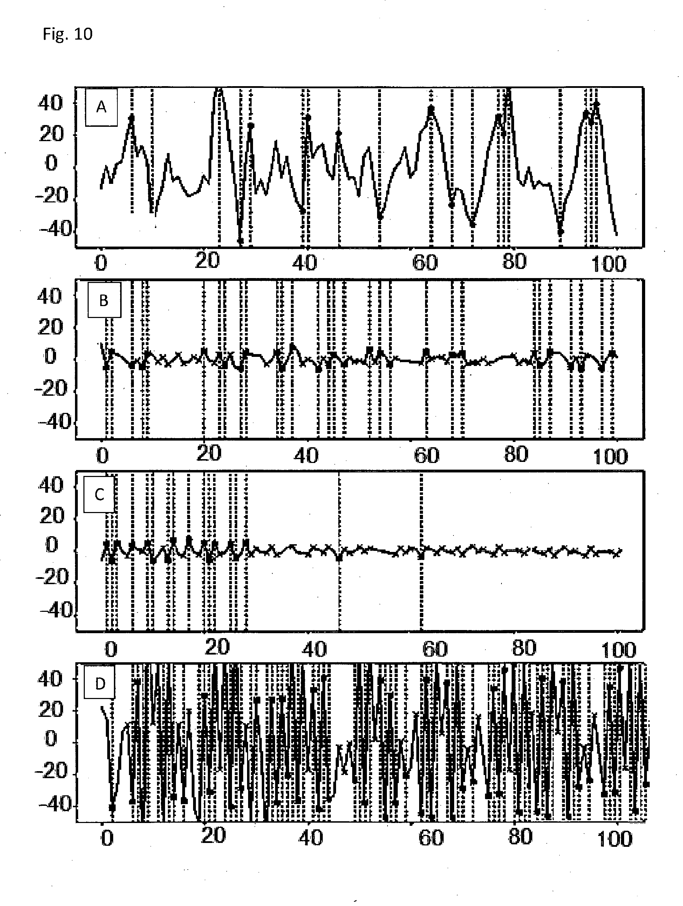

Figure 10 represents signal data processed by the method according to the invention.

Figure 10 shows a concept of the present invention with an experimental result (generated spikes shown are derived from real radar data).

The idea is to capture the change of features with time passing.

Figure 10 shows the evolution of the time series features.

The diagram "A" represents a baby 1 in the car (baby 1 as schematically represented in figure 2).

The diagram "B" represents an empty seat (e.g. position 4 as schematically represented in figure 2).

The diagram "C" represents a (PET) bottle (e.g. at position 2 as schematically represented in figure 2).

The diagram "D" represents a jerrican (e.g. at position 2 as schematically represented in figure 2).

For the diagram "C", there is attenuation of vibration with passing time, so that a bottle is considered to be detected.

Points in the diagram correspond to peak values that are greater than a predetermined threshold and crosses in the diagrams correspond also to peak values but they are lower than the predetermined threshold. Only in the case of the points (i.e. greater than the predetermined threshold), spikes are generated, which are represented as dashed line in the diagram.

This embodiment is one example. It is also possible to use other features such as trend(s) in time series, and different method to generate spikes other than thresholding. The moving average could be used as a trend extraction method. It is a simple method with good results. Actually, signals in figure 10 is the data whose trend was removed by using moving average, in contrast, the signal before applying the moving average are figures and figure 9.

For the diagram "A", there is a steady movement with passing time, so that a baby 1 is considered to be detected, inside the vehicle. The system may emit a warning (e.g. voice message, sound, light or haptic such as haptic on the key of the vehicle) to highlight the presence of the baby 1, for example in cooperation with another detection such as seat belt not fasten. This could be used also for the use in cooperation with a profile of driver, by adapting the seat, the mirrors and/or the radio to the corpulence of the detected person.

Table 1 shows a comparison of different kind of sensors for this application.

**Table 1**

| | **mm Wave radar** | **ultrasonic sensor** | **camera** | **pressure sensor** |
|---|---|---|---|---|
| **presence detection** | good (micro motion) | poor | good (image analytics) | poor |
| **lighting environment interference** | good | good | poor | good |
| **position detection** | good | poor | poor | poor |
| **privacy protection** | good | good | poor | good |

Millimeter wave radar is the preferred or best match within the present invention, but it is possible to use other sensors. For example, we can make time series data with ultrasonic sensor (sonar) or camera (vision sensor), then we can apply same methodology (as presented above) to them in order to implement the present invention.

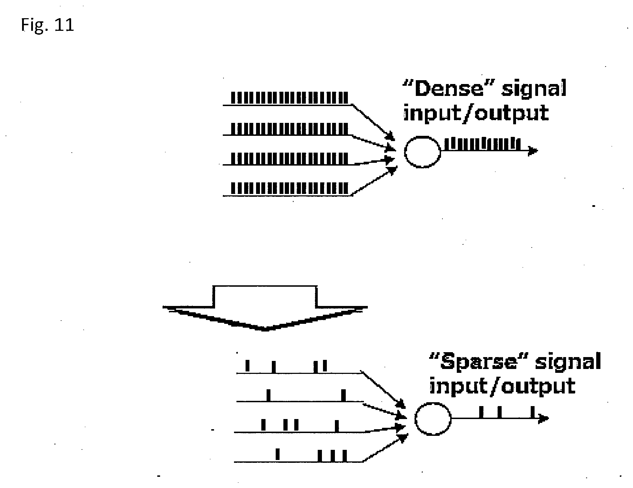

Figure 11 represents a comparison of signals with a deep neural network DNN and a spiking neural network SNN.

The DNN, generally including deep learning, deals with dense signal at input and output, as illustrated on upper portion of figure 11.

Thereby, an iterative processing is mandatory, even if the same data is inputted repeatedly, leading to a redundant processing. This requires computational capacities and effort.

The spiking neural network SNN deals with sparse signal at input and output, as illustrated on lower portion of figure 11.

Thereby, there is no need to do the same, repeated processing.

That is, SNN can be used as an "always running system", which does not consume energy in idling. There is an huge contribution in terms of energy by using SNN, in particular for automotive applications.

The invention can be used for automotive applications, but also in other fields, e.g. leaving area, such as hospitals, room of hospitals, or safety/security areas.

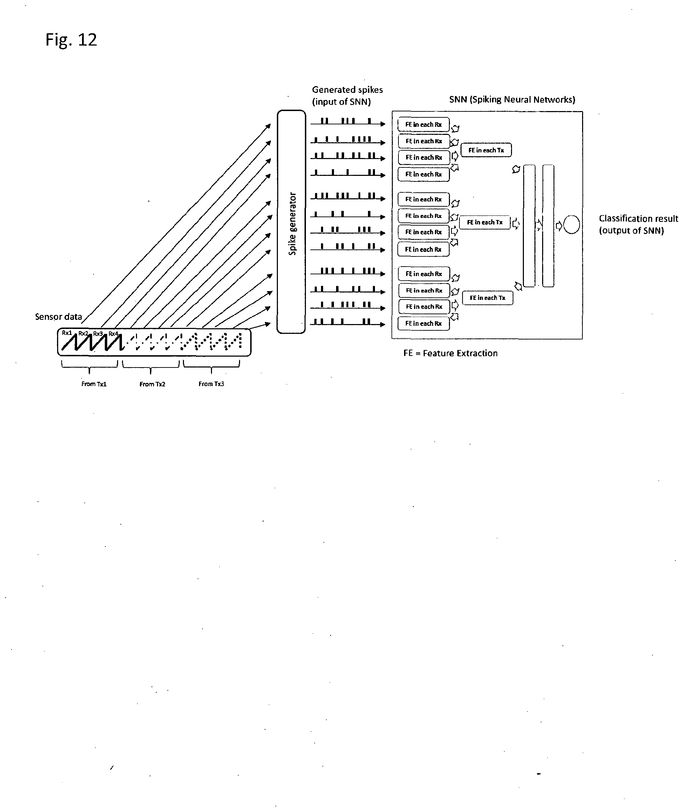

Figure 12 represents details of functioning of the spiking neural network.

The spiking neural network SNN comprises at least one receiver layer (layer A) and at least one transmitter layer (layer B). The SNN may further comprises input nodes and output nodes. The SNN may optionally have an additional layer (layer C) for any purpose.

The receiver layer has a number of feature extraction branches equal to the first predetermined number (of receivers Rx). The transmitter layer has a number of feature extraction branches equal to the second predetermined number (of transmitters Tx).

The input nodes is arranged to divide signal data from the monitoring device 100, in particular from the receivers Rx, into divided signal data. That is, the input nodes are arranged to divide the signal data into divided signal data for each receiver Rx and linked to each transmitter Tx, so as to have a divided set of a third predetermined number of divided signal data, the third predetermined number being equal to the first predetermined number multiplied by the second predetermined number. The division of the signal data has been explained before. The divided set (of signal data) is inputted to the receiver layer for processing.

The receiver layer processes the divided set of signal data, in particular for denoising of the data, while running feature extraction (FE), with a training. The transmitter layer processes the processed data from the receiver layer, while running feature extraction. It is possible also to correct the computation of angle by grouping correctly the signal from transmitters. The processed data from the transmitter layer is sent to the next layer (layer C) which is a fully connected one, and then finally sent to the output nodes.

The output nodes may have for example two branches (without being limited to such number) and finalize the results to be outputted by the SNN (e.g. class 1, class 2, class 3, passenger on seat number 1, baby, child, adult, bottle, thing, etc). This could be for example a cleaning of the results. For example, the transmitter layer (layer B) outputs some probabilities of results and the output nodes concludes with a result.

The divided set of each chirp corresponding to each receiver Rx and each transmitter Tx is inputted in the receiver layer, at the level of the corresponding one branch. Then, the processed data from the receiver layer are inputted in the transmitter layer, at the level of the corresponding branch. The output from the transmitter layer is then sent to the output nodes, for outputting a clear result.

In input nodes as discussed before, each divided data (chirp) is inputted into each branch.

From the implementation point of view, it is necessary to prepare one or multiple nodes on the edge of each branch.. In the present case, we prepare one node on the edge of each branch, which is for inputting generated spike signal.

In a preferred embodiment, each signal will pass both layers, it means each signal has to have two class attributions.

That is, the first point is to avoid the mixing signals from different transmitters, it means we want to use attribution of Tx (and Rx). Further, the second point is to deal with signals in each Rx for precise angle computation.

That is, dealing with two attributions is necessary for angle computation.

A phase difference between reflected signal to the first receiver Rx1 and to the second receiver Rx2 can happen. Phase difference may be computed by using signals from same transmitter and at different receivers. So if we consider this computation in SNN, two attributions (Tx and Rx info) are necessary.

Finally, in other words, the prior art deals with all data as same and input all data at once without clear separation. The present invention has better performances by differentiating the layers in dependency of the structure of the hardware (such as numbers of receivers and number of transmitters), with receiver layer having the number of feature extraction branches equal to the number of receivers, and transmitter layer having the number of feature extraction branches equal to the number of transmitters, and by using SNN.

It is of course understood that obvious improvements and/or modifications for one skilled in the art may be implemented, still being under the scope of the invention as it is defined by the appended claims.

## Claims

1. A computer-implemented method for detecting at least one object or at least one person (1) in a monitored area (200) of a monitoring device (100),
the method comprising the steps of :
- receiving (S1) signal data from the monitoring device (100),
- composing (S2) time series data based on the signal data received,
- extracting (S3) times series features from the time series data,
- generating (S4) spikes from the time series features,
- detecting (S5) at least one object or at least one person (1) based on the generated spikes.

2. The computer-implemented method according to claim 1, wherein the method further comprises the step of :
- inputting the generated spikes in a neural network and outputting from the neural network a detection of the at least one object or at least one person (1),
or
- treating the generated spikes with a support vector machine (SVM), a principal component analysis (PCA), K-means, random forests, a decision tree or a classifier.

3. The computer-implemented method according to claim 2, wherein the neural network is a spiking neural network (SNN).

4. The computer-implemented method according to any one of the preceding claims, wherein the signal data has a real part and a imaginary part, and the method further comprises the step of:
- composing time series data based on the real part of the signal data received and/or time series data based on the imaginary part of the signal data received.

5. The computer-implemented method according to any one of the preceding claims, wherein the method further comprises the steps of:
- recognizing a pattern of generated spikes,
- allocating the pattern of generated spikes to a result of detection.

6. The computer-implemented method according to the preceding claim, wherein the method further comprises the step of:
- retrieving, in a data base, supervised or unsupervised patterns linked to objects and persons to be detected.

7. The computer-implemented method according to the preceding claim, wherein the method further comprises the step of :
- comparing the pattern of generated spikes to the supervised or unsupervised patterns and judge a match or a mismatch of the pattern of generated spikes with the supervised patterns.

8. The computer-implemented method according to any one of claims 5 to 7, wherein the result of detection is selected in the group consisting of :
a passenger, an adult, a child, a baby, no person on a seat, a cat, a dog, an animal, a bottle and an object.

9. The computer-implemented method according to any one of the preceding claims, wherein the monitoring device (100) has a first predetermined number of receivers and a second predetermined number of transmitters, and wherein the signal data corresponding to a set of receivers and transmitters is mixed for composing the time series data.

10. The computer-implemented method according to any one of claims 1 to 8, wherein the monitoring device (100) has a first predetermined number of receivers and a second predetermined number of transmitters, and wherein the method further comprises the steps of:
- dividing the signal data into divided signal data for each receiver linked to each transmitter, so as to have a divided set of a third predetermined number of divided signal data, the third predetermined number being equal to the first predetermined number multiplied by the second predetermined number,
- composing the time series data based on the divided signal data.

11. The computer-implemented method according to any one of the preceding claims, wherein the signal data is a signal data received from a sensor, such as a radar, a sonar or a camera.

12. The computer-implemented method according to any one of the preceding claims, wherein the signal data is raw signal data in a complex format.

13. The computer-implemented method according to any one of the preceding claims, wherein the signal data is data with or without filtering, but without conversion of format.

14. A computer-readable medium comprising instructions which, when executed by a computer, cause the computer to carry out the method of claims 1 to 13.
